# EUROPÄISCHE PATENTSCHRIFT

(11) **EP 3 699 118 B1**
(45) Veröffentlichungstag und Bekanntmachung des Hinweises auf die Patenterteilung: **30.03.2022**
(21) Anmeldenummer: 20000076.8
(22) Anmeldetag: 20.02.2020
(51) Int. Cl.: B65G 47/51, B65B 43/44, B65G 65/00, B65B 3/04, B65B 7/16, B65B 7/28, B65B 55/04

(54) **ZUFÜHREINRICHTUNG FÜR BEHÄLTERTEILE ZUR VERWENDUNG AN EINER VORRICHTUNG ZUM BEFÜLLEN VON BEHÄLTERN MIT FLÜSSIGEN BIS PASTÖSEN NAHRUNGSMITTELN**
FEEDING DEVICE FOR CONTAINER PARTS FOR USE ON A DEVICE FOR FILLING CONTAINERS WITH LIQUID TO PASTY FOODSTUFFS
DISPOSITIF D'ALIMENTATION POUR PARTIES DE RÉCIPIENT DESTINÉ À ÊTRE UTILISÉ SUR UN DISPOSITIF DE REMPLISSAGE DES RÉCIPIENTS DES DENRÉES ALIMENTAIRES LIQUIDES À PÂTEUX

(30) Priorität: 20.02.2019 DE 102019104303
(43) Veröffentlichungstag der Anmeldung: 26.08.2020
(73) Patentinhaber: ERCA, 91940 Les Ulis (FR)
(72) Erfinder: STIEGLER, Achim, 74564 Crailsheim (DE); GRAF, Timo, 73663 Berglen (DE); STRAUCH, Fritz, 66440 Blieskastel (DE); KRÜGER, Harald, 74572 Blaufelden (DE); DANIEL, Jan, 66287 Quierschied (DE)
(74) Vertreter: Cabinet Beau de Loménie

(56) Entgegenhaltungen:
- EP-A1- 1 075 924
- EP-A1- 1 495 997
- DE-A1- 10 356 001
- JP-A- 2000 355 425
- US-A1- 2002 110 441

## Beschreibung

Die Erfindung betrifft eine Zuführeinrichtung nach dem Oberbegriff des Anspruchs 1.

Die Erfindung ist dem Feld der Vorrichtungen zur Abfüllung von Lebensmitteln in geeignete Behälter zuzurechnen. Insbesondere ist sie dem Feld der Abfüllung von flüssigen bis pastösen Lebensmitteln in Becher zuzuordnen, wobei es sich bei den Lebensmitteln in der Regel um Molkerei- oder Fettprodukte wie Milch, Milchmischgetränke, Joghurts, Margarine, Butter, Pudding oder ähnliches handelt. Bei riesel- und schüttfähigen Nahrungsmitteln handelt es sich beispielsweise um Cerealien. Dabei ist zu unterscheiden zwischen Vorrichtungen, die der Befüllung von vorgeformten und der Anlage zugeführten Einzelbechern dienen und solchen, bei welchen in einem der Befüllung vorgelagerten Schritt erstellte Tiefziehbecher befüllt werden, die erst nach dem eigentlichen Befüllprozess im Zusammenhang mit oder der Siegelung nachgeschaltet voneinander getrennt werden.

Einzelbecher werden ineinandergenestet stapelweise der Abfüllvorrichtung zugeführt und, sofern es das Produkt erfordert oder der Kunde wünscht, nach einem Siegelvorgang mit Deckeln, insbesondere Stülpdeckeln versehen. Auch diese Deckel werden ineinandergenestet gestapelt und stapelweise der Abfüllvorrichtung zugeführt. Eine solche Handhabung steht im Gegensatz zur vorgenannten Tiefziehfertigung von Behältern, bei welchen eine Tiefziehfolie im Grunde endlos der Abfüllvorrichtung zugeführt wird.

Abfüllvorrichtungen für Einzelbecher sind beispielsweise in EP 1 495 997 A1 gezeigt, wobei die Druckschrift insbesondere Abfüllvorrichtungen mit sogenanntem kettenlosen Antrieb offenbart. Solche Abfüllvorrichtungen verfügen über umlaufende Trageelemente, sogenannte Zellenbretter, die in Reihen nebeneinander und Bahnen hintereinander angeordnete Ausnehmungen zur Aufnahme von Einzelbechern aufweisen. Die Einzelbecher werden mittels der Tragelemente entlang einzelner Arbeitsstationen geführt, um gereinigt, sterilisiert, getrocknet, befüllt, gesiegelt und im Zweifel zum Schluss mit einem Stülpdeckel versehen zu werden. Beim Auslaufen der so befüllten Becher am Maschinenende erfolgt sodann die Sortierung und Verpackung der einzelnen Behälter zu transportgerechten Gebinden.

Dieser grundsätzliche Ablauf ist dabei unabhängig davon, ob ein kettenloser Antrieb gemäß der vorgenannten Druckschrift oder ein Vorzug der Tragelemente mittels einer umlaufenden Kette erfolgt.

Sowohl die Einzelbecher als auch die Stülpdeckel als die jeweiligen Behälterteile werden, wie schon vorerwähnt, als ineinandergenestete Stapel an die Abfüllvorrichtung angeliefert und in eine jeweilige Zuführeinrichtung eingestellt. Die Zuführeinrichtung selbst platziert dann die Becher bzw. Deckel an der geeigneten Arbeitsstation in der Abfüllvorrichtung.

Die einzelnen Stapel können trotz Nestung instabil sein. Dies tritt beispielsweise bei bestimmten Becherformen, wie tulpenförmigen Bechern auf. Diese Formen erlauben aufgrund ihrer Krümmung eine höhere Bewegungsfreiheit relativ zueinander als beispielsweise konisch geformte Becher. Stapelinstabilitäten treten jedoch auch dort auf, wo die ineinandergreifenden Nestkonturen der gestapelten Becher oder Deckel nur geringfügig ineinandergreifen. Solche, nur geringfügig ineinandergreifenden Nestkonturen aufweisende Stapel sind besonders anfällig gegen quer zur Stapelrichtung wirkende Kräfte. Naturgemäß trifft dieses Problem insbesondere Stülpdeckelstapel, aber auch Stapel von Behältern mit geringer Behälterhöhe.

Aus dem druckschriftlich nicht belegbaren Stand der Technik ist eine Zuführeinrichtung für Behälterbestandteile in Form von Stülpdeckeln für Einzelbecher bekannt. Diese umfasst eine Stabilisiereinrichtung mit Aufnahmeschächten. Diese sind nebeneinander in Reihe angeordnet und entsprechen in ihrer Zahl den in einer Reihe nebeneinander angeordneten Ausnehmungen der Zellenbretter der zugehörigen Abfüllvorrichtung. Die Aufnahmeschächte sind mit einer schachtlängsaxialen Aufnahmeöffnung versehen, durch welche Stülpdeckelstapel von einer Bedienperson in die Aufnahmeschächte eingesetzt werden können. Die Schachtwände der Aufnahmeschächte stabilisieren den jeweiligen Stülpdeckelstapel.

Hat der Bediener jeden Aufnahmeschacht mit einem Stülpdeckelstapel versehen, betätigt er über eine Auslösevorrichtung eine Entnahmeeinrichtung, üblicherweise einen Elevator. Dieser weist Elevatorstempel auf, die unterhalb der Aufnahmeschächte angeordnet sind und nunmehr durch eine Öffnung im jeweiligen Schachtboden in den Schacht eindringen und die Stülpdeckelstapel nach oben anheben. Oberhalb der Aufnahmeschächte ist ein Zuführrahmen angeordnet, in welchen die Stülpdeckelstapel eingeführt werden. Der Zuführrahmen wird dann in der zugeordneten Abfülleinrichtung an einem Bestückungsautomaten positioniert, der die befüllten und ggf. gesiegelten Becher mit Stülpdeckeln versieht. Um einen kontinuierlichen Betrieb der Abfüllvorrichtung zu gewährleisten, sind zumindest zwei Zuführrahmen im Wechsel in Betrieb, so dass jeweils ein mit Stülpdeckeln versehener Zuführrahmen im Bereich der Abfülleinrichtung und ein leerer Zuführrahmen im Bereich der Zuführeinrichtung angeordnet ist.

Die hohen Verarbeitungsgeschwindigkeiten der Abfülleinrichtungen erfordern ein quasi kontinuierliches Nachlegen von Stülpdeckelstapeln, so dass der Bediener ununterbrochen die Aufnahmeschächte beschickt. Eine Verzögerung bei der Befüllung der Aufnahmeschächte mit Stülpdeckelstapeln, wie sie beispielsweise durch Unachtsamkeit, den Einsatz des Bedieners an anderer Stelle der Abfülleinrichtung oder durch das Öffnen eines neuen Stülpdeckelgebindes entstehen kann, führt zwangsläufig zu einer Unterbrechung des Abfüllprozesses. Eine solche Unterbrechung kann in anderen Arbeitsstationen der Abfüllvorrichtung, beispielsweise der Sterilisation oder der Befüllung, gravierende Auswirkungen haben. Die Folge sind lange Rüstzeiten vor einem Wiederanlauf der Anlage.

Aus dem ebenfalls nicht druckschriftlich belegbaren Stand der Technik ist eine Zuführeinheit für Becher bekannt, die bei Abfüllvorrichtungen für Behälter Einsatz findet. Diese besteht aus einem umlaufenden Förderband. Oberhalb des Förderbandes sind Teilungselemente angeordnet, die einen in Bahnen unterteilten Magazinraum bilden. Die Anzahl nebeneinander angeordneter Bahnen entspricht dabei der Anzahl der auf Tragelementen der Abfüllvorrichtung in Reihen nebeneinander angeordneten Aufnahmeöffnungen für Behälter. In jede über die Teilungselemente definierte Bahn werden nun hintereinander Behälterstapel gestellt. Auf diese Weise wird ein Puffermagazin für Becher realisiert, bei welchem auf dem umlaufenden Förderband in Bahnen hintereinander und Reihen nebeneinander Becherstapel stehen. Am abfüllvorrichtungsnahen Ende werden Becherstapel entnommen und der Bechereinsetzstation zugeführt. Die Bechereinsetzstation setzt sodann die Einzelbecher in Reihen nebeneinander und Bahnen hintereinander in die Tragelemente der Abfüllvorrichtung ein.

Nach Entnahme einer Reihe von nebeneinander angeordneten Becherstapeln erfolgt eine Förderbewegung des Förderbandes des Puffermagazins für Becher und fördert die nächste Reihe Becherstapel an die Bechereinsetzstation.

Diese Zuführeinrichtung ist nur für durch Nestung in sich stabile Becherstapel geeignet, da die quer zur Stapelrichtung wirkende Vorzugskräfte bei fehlender Nestung oder zu geringer Nestung zu einer Teilung des Stapels während des Transportvorgangs und damit zu einem Stapelkippen führen. Aus der DE 20 2013 004 063 U1 ist eine Vorrichtung zur Becherzuführung bekannt, die einen Kettenantrieb mit einer oberen umlaufenden Kette und einer unteren umlaufenden Kette aufweist. Mehrere Wechselmagazine können jeweils mit einem Becherstapel befüllt und in linearer Anordnung entlang der Ketten mit diesen verbunden werden. Die Wechselmagazine werden an einen Aufnahmebereich bewegt. Dort durchgreifen Becherlifte jeweils Bodenöffnungen der Wechselmagazine, um darin befindlichen Becherstapel anzuheben, den Wechselmagazinen zu entnehmen und Führungsmagazinen zur weiteren Bearbeitung zuzuführen. Jedes Wechselmagazin muss zur Befüllung der Vorrichtung einzeln entnommen und zur Förderung der Becherstapel einzeln mit der Vorrichtung verbunden werden, was die Handhabung der Vorrichtung erschwert und deren Bedienung verzögert.

JP 2000 355425 A offenbart eine Zuführeinrichtung nach dem Oberbgriff des Anspruchs 1.

Aufgabe der Erfindung ist es, eine optimierte Zuführeinrichtunq für nicht- oder geringgenestete Behälterbestandteile, wie beispielsweise Stülpdeckel, zu schaffen, bei welcher die Nachteile aus dem Stand der Technik beseitigt sind, insbesondere die Bedienbarkeit verbessert und insbesondere eine Verzögerung der Befüllung von Aufnahmeschächten nicht unmittelbar Auswirkungen auf die Abfüllanlage selbst hat.

Gelöst wird die Erfindung von einer Zuführeinrichtung mit den Merkmalen des Anspruches 1, insbesondere mit den kennzeichnenden Merkmalen, wonach die erste Richtung, in der die Aufnahmeschächte einer der Stabilisiereinrichtungen neben- und/oder hintereinander angeordnet sind, ungleich der zweiten Richtung ist, in der die Bewegungsbahn verläuft. Auf diese Weise ergibt sich eine platzsparende Anordnung der Aufnahmeschächte der Stabilisiereinrichtungen im Puffermagazin und die Bedienbarkeit der Zuführeinrichtung wird verbessert.

Im Sinne der Erfindung bezeichnet eine Richtung einen mathematischen Richtungsvektor, so dass insbesondere der Winkel zwischen der ersten Richtung und der zweiten Richtung ungleich 0°und/oder 180° beträgt. Vorzugsweise beträgt der Winkel zwischen der ersten Richtung und der zweiten Richtung insbesondere zwischen 45° und 135°, weiter insbesondere zwischen 60° und 120°, vorzugsweise zwischen 70° und 110°, insbesondere zwischen 80° und 100°, höchst vorzugsweise 90°. Zueinander parallele Richtungen sind im Sinne der Erfindung gleich; nicht zueinander parallele Richtungen sind demgemäß ungleich. Mindestens eine der Stabilisiereinrichtungen kann entlang der ersten Richtung dem Puffermagazin entnehmbar, insbesondere aus diesem ausziehbar sein. Vorzugsweise entspricht die erste Richtung der Auszugrichtung mindestens einer der Stabilisiereinrichtungen.

Die zweite Richtung ist vorzugsweise parallel zur Richtung der Bewegungsbahn ausgerichtet. Insbesondere sind die Stabilisiereinrichtungen einzeln und/oder gruppenweise parallel zur zweiten Richtung beweglich, um ein gezieltes Ansteuern von mindestens einer gewünschten Stabilisiereinrichtung zu ermöglichen.

Mindestens eine der Stabilisiereinrichtungen weist ein Bodenelement, insbesondere für sämtliche Aufnahmeschächte der Stabilisiereinrichtung, auf. Mindestens zwei, vorzugsweise sämtliche Aufnahmeschächte der Stabilisiereinrichtung können einstückig ausgestaltet sein, um einen konstruktiv einfachen Aufbau zu erhalten.

Die Erfindung hat in einer Ausgestaltung eine Möglichkeit gefunden, instabile Stapel von Behälterbestandteilen, insbesondere von Stülpdeckeln, in stabiler Stapellage in einem Pufferspeicher zusammenzufassen, so dass eine ausreichend große Menge vorgehalten werden kann, um den Stopp der Abfüllvorrichtung aufgrund fehlender Behälterbestandteile, wie Stülpdeckel, zu vermeiden. Hierzu sind nunmehr mehrere Stabilisiereinrichtungen vorgesehen. Diese lassen sich nach einer Befüllung mit Behälterbestandteilen, wie Stülpdeckeln, entlang der Bewegungsbahn beispielsweise schrittweise vorziehen, so dass nach jedem Vorzugstakt eine befüllte Stabilisiereinrichtung im Wirkbereich der Entnahmeeinrichtung angeordnet ist. Nach der Entnahme der Behälterbestandteile werden die Stabilisiereinrichtungen um einen weiteren Schritt vorgezogen, um sodann wieder ausreichend viele Stapel von Behälterbestandteilen in den Wirkbereich der Entnahmeeinrichtung zu verbringen. Nach einem vollständigen Durchzug der Stabilisiereinrichtungen, aber auch während des schrittweisen Durchzugs, ist es möglich, entleerte Stabilisiereinrichtungen erneut zu befüllen. Insbesondere ist die Richtung der Anordnung der Aufnahmeschächte mindestens einer der Stabilisiereinrichtungen mindestens abschnittsweise im Wesentlichen senkrecht zur Bewegungsbahn ausgerichtet.

Um das Befüllen einfach zu gestalten, ist vorgesehen, dass die Stabilisiereinrichtungen jeweils einzeln vorzugsweise in etwa quer zur gemeinsamen Bewegungsbahn ausziehbar sind, um die Einsetzöffnungen der Aufnahmeschächte zugänglich zu machen. Sinnvollerweise ist beispielsweise eine Auszugssperre vorgesehen, die den Auszug der sich im Wirkbereich der Entnahmeeirichtung befindlichen Stabilisiereinrichtung verhindert.

Eine bevorzugte Ausführungsform kennzeichnet sich dadurch, dass das Puffermagazin in einem Maschinengestell angeordnet ist, welches einen Zugang zu den Stabilisiereinrichtungen über ein Ausziehfenster gewährleistet und/oder dass das Puffermagazin eine flächige Anordnung der darin befindlichen Aufnahmeschächte aufweist. Insbesondere ist vorgesehen, dass die Breite des Ausziehfensters wenigstens der Länge der Bewegungsbahn der Stabilisiereinrichtungen entspricht.

Zur Unfallverhütung ist insbesondere vorgesehen, dass das Ausziehfenster über einen Eingriffsschutz verfügt, der einen Eingriff eines Benutzers in die Bewegungsbahn der Stabilisiereinrichtungen verhindert.

Aufgrund der Bewegung der Stabilisiereinrichtungen entlang der Bewegungsbahn kann es erforderlich sein, dass der Eingriffsschutz längenvariabel ausgestaltet ist, um die auf Grund der Bewegung der Stabilisiereinrichtungen jeweils in Ihrer Länge veränderlichen Ausziehfensterfreiräume zwischen einem Ausziehfensterrahmenteil und der entlang der Bewegungsbahn ersten beziehungsweise letzten Stabilisiereinrichtung geschlossen zu halten.

Dabei hat es sich als äußerst vorteilhaft erwiesen, wenn der Eingriffsschutz als Rollo oder plisseeartiger Vorhang ausgebildet ist, der an einem Rahmen des Ausziehfensters einerseits und an der ersten bzw. letzten Stabilisiereinrichtung andererseits angeschlagen ist und im Übrigen bevorzugt in zwei bewegungsbahnparallelen, den Eingriffsschutz zwischen sich aufnehmenden Führungsschienen gelagert ist.

Ebenfalls dem Unfallschutz kann es dienen, wenn die Schachtwand des zuführfensternahen Aufnahmeschachtes einer jeden Stabilisiereinrichtung den Eingriffsschutz bildet, indem die Schachtwand den Eingriff eines Benutzers in die Bewegungsbahn der Stabilisiereinrichtungen über die bewegungsbahnparallel gemessene Breite der jeweiligen Stabilisiereinrichtung verhindert.

Die Erfindung bevorzugt eine Ausführungsform, bei welcher die Stabilisiereinrichtung ein Bodenelement umfasst, auf welchem die Aufnahmeschächte angeordnet sind.

Es hat sich als vorteilhaft erwiesen, wenn die Aufnahmeschächte im Wesentlichen als durch vertikale Teilung entstandener Halbzylinder ausgebildet sind und insbesondere die Form eines hälftig geteilten, hexagonalen Zylinders aufweisen. Die vertikalen Halbzylinder gewähren eine ausreichend große Einsetzöffnung, so dass Stapel ineinandernestbarer Behälterteile schnell und einfach eingesetzt werden können. Die Befüllung der Stabilisiereinrichtungen lässt sich somit sehr effektiv gestalten.

Die Form eines hälftig geteilten hexagonalen Zylinders gewährleistet eine vorteilhafte Herstellung der Aufnahmeschächte sowie eine selbstzentrierende Lage der Behälterteilestapel.

Die Fertigung der Aufnahmeschächte der Stabilisiereinrichtungen lässt sich weiter vereinfachen, wenn in einer weiteren Ausgestaltung die einzelnen Aufnahmeschächte einer Stabilisiereinrichtung, insbesondere als Halbzylinder, durch Materialstege untereinander verbunden sind und insbesondere aus einem Materialstück geformt, bevorzugt aus einem Blechstück gekantet sind.

In konkreter Form kann der Eingriffsschutz der Stabilisiereinrichtungen dadurch gebildet sein, dass der in Auszugrichtung vorn liegende Aufnahmeschacht mit einer insbesondere die quer zur Auszugrichtung gemessene Breite des Bodenelementes überspannenden Blende versehen ist, die als Eingriffsschutz dient.

Hieraus ergibt sich vorteilhafterweise, dass die Blende Teil des Zylindermantels ist und der in Auszugsrichtung vorn liegende Aufnahmezylinder in etwa als Dreiviertelzylinder ausgebildet ist.

Die Ausförderung der Behälterteilstapel wird gewährleistet, indem das Bodenelement im Bereich eines jeden Aufnahmeschachtes eine Öffnung für den Durchtritt eines Ausförderwerkzeugs der Entnahmeeinrichtung ausbildet.

Die stabile Lage der Behälterteilestapel bei der Vorzugsbewegung der Stabilisiereinrichtungen entlang ihrer Bewegungsbahn wird dadurch gewährleistet, dass beispielsweise die Schachtwände der Aufnahmeschächte von einer im Bereich der Einsetzöffnung angeordneten, vertikalen Ebene wegweisend geneigt sind.

Dabei ist es bevorzugt vorgesehen, dass die Neigung der Schachtwände durch eine Neigung des mit den Schachtwänden verbundenen Bodenelementes gegenüber der Horizontalen der Bewegungsbahn hervorgerufen ist.

Die Neigung der Schachtwände, insbesondere in Verbindung mit der Neigung der Bodenelemente, gewährleistet eine sichere Anlage der Behälterteilestapel an den Schachtwänden. So wird ein Teilen der Behälterteilestapel durch senkrecht zur Stapelrichtung auftretende Kräfte, beispielsweise beim Vorzug der Stabilisiereinrichtung, wirksam vermieden. Der Stapel bleibt intakt. Die Entnahme ist entsprechend gewährleistet. Maschinenstörungen die zum Stopp der Behälterbefüllung führen, werden so wirksam vermieden.

Vorgesehen ist insbesondere, dass das Bodenelement und/oder die Aufnahmeschächte auswechselbar auf einem ausziehbaren Rahmen angeordnet sind.

So ist gewährleistet, dass bei einem Formatwechsel der Tragelemente der Abfüllvorrichtung auch das Format der Aufnahmeschächte an andersartig ausgebildete Behälterteile angepasst werden kann.

Schließlich ist vorgesehen, dass die Bewegungsrichtung der Stabilisiereinrichtungen entlang ihrer Bewegungsbahn parallel zur Vorzugseinrichtung der Vorrichtung zum Befüllen der Behälter ausgerichtet ist.

Ein besseres Verständnis der Erfindung sowie weitere Vorteile und Merkmale der Erfindung folgen aus der Beschreibung eines Ausführungsbeispieles. Es zeigen:
- Fig. 1: eine erfindungsgemäße Zuführeinrichtung in perspektivischer Ansicht,
- Fig. 2: die Zuführeinrichtung gemäß Fig. 1 mit ausgezogener
- Fig. 3: eine Ansicht der Zuführeinrichtung gemäß Fig. 1 in Ansicht auf das Ausziehfenster,
- Fig. 4: eine Ansicht gemäß Fig. 3 mit in ihrer Lage veränderten Stabilisiereinrichtungen,
- Fig. 5: eine Schnittdarstellung der Zuführeinrichtung gemäß Schnittlinie B-B in Fig. 4,
- Fig. 6: eine Stabilisiereinrichtung in perspektivischer Ansicht und
- Fig. 7: eine Stabilisiereinrichtung gemäß Fig. 6 in Ansicht von oben.

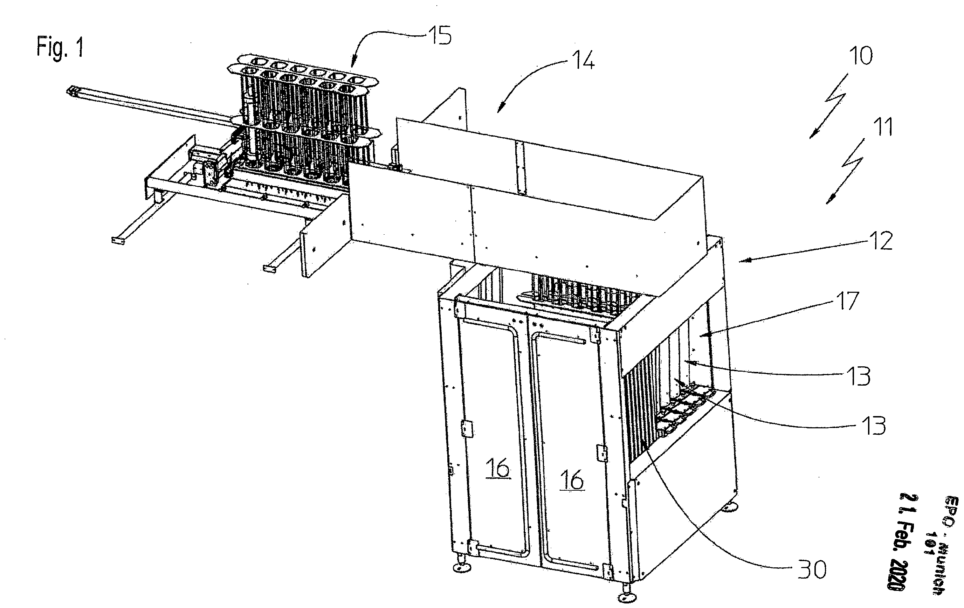

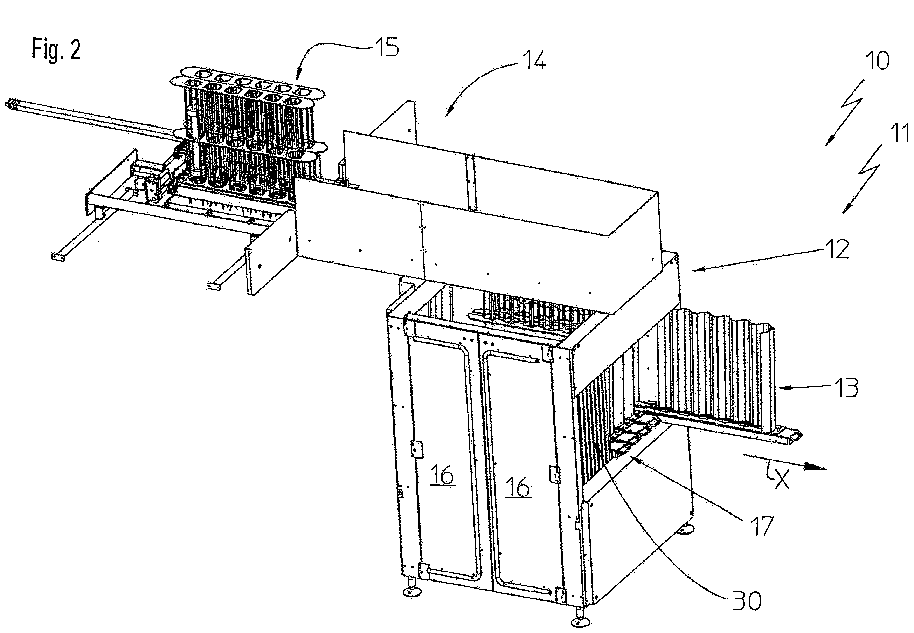

Eine Zuführeinrichtung für Behälterteile ist in den Fig. 1 bis 7 durchgängig mit der Bezugsziffer 10 versehen.

Eine solche Zuführeinrichtung wird beispielsweise in Abfüllvorrichtungen für flüssige bis pastöse bzw. riesel- und schüttfähige Lebensmittel in Becher eingesetzt. Bei einer solchen Abfüllvorrichtung laufen Tragelemente mit in Reihen nebeneinander und Bahnen hintereinander angeordneten Ausnehmungen zur Aufnahme von Bechern umlaufend an Arbeitsstationen entlang. Bei solchen Arbeitsstationen handelt es sich beispielsweise um die Bechersterilisation, Trocknung, Befüllung, Siegelung sowie eine Deckelaufsetzstation.

Die Zuführeinrichtung 10 in der nachfolgend beschriebenen Ausführungsform dient dazu, gering oder nicht genestete Behälterteile, also entweder Becher oder deren Deckel, insbesondere Stülpdeckel, in einer gewissen Menge vorzuhalten und entsprechend des Bedarfes der Abfüllvorrichtung zuzuführen. Im Folgenden wird exemplarisch die Zuführeinrichtung 10 in ihrer Verwendung mit Stülpdeckeln für Becher beschrieben, was deren Analogeinsatz unter Verwendung von Bechern oder anderen Behälterteilen keinen Abbruch tut.

Fig. 1 zeigt die Zuführeinrichtung 10 in perspektivischer Ansicht. Ein Maschinengestell 11 verfügt zunächst über eine Puffereinhausung, in welcher mehrere, ein Puffermagazin 12 bildende Stabilisiereinrichtungen 13 gelagert sind. Eine ebenfalls zum Maschinengestell 11 gehörige Transportbrücke 14 ist oberhalb des Puffermagazins 12 angeordnet und erstreckt sich seitlich bis in den Bereich einer hier nicht dargestellten Vorrichtung zum Befüllen von Behältern.

Die Transportbrücke 14 verfügt über Zuführrahmen 15, die wechselweise zwischen einer abfüllvorrichtungsnahen Endposition und einer puffereinhausungsnahen Endposition hin- und her bewegt werden. In der puffereinhausungsnahen Endposition nehmen die Zuführrahmen 15 Behälterteile wie Stülpdeckel auf, um sie nach dem Wechsel in die abfüllvorrrichtungsnahe Endposition zum Aufsetzen auf befüllte und gesiegelte Becher auszufördern.

Das in Fig. 1 gezeigte Puffermagazin 12 verfügt über einen mit Türen 16 gesicherten Wartungszugang, über welchen Wartungspersonal im Falle einer Störung Zugang erlangen kann. Seitlich verfügt das Puffermagazin 12 über ein sogenanntes Ausziehfenster 17. Über dieses hat der Bediener bei den gewöhnlichen Arbeitsroutinen Zugang zu den Stabilisiereinrichtungen 13.

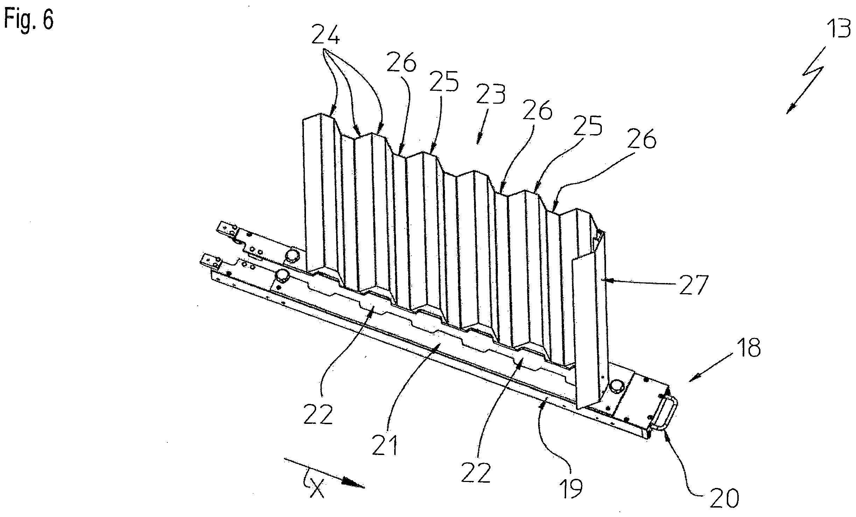

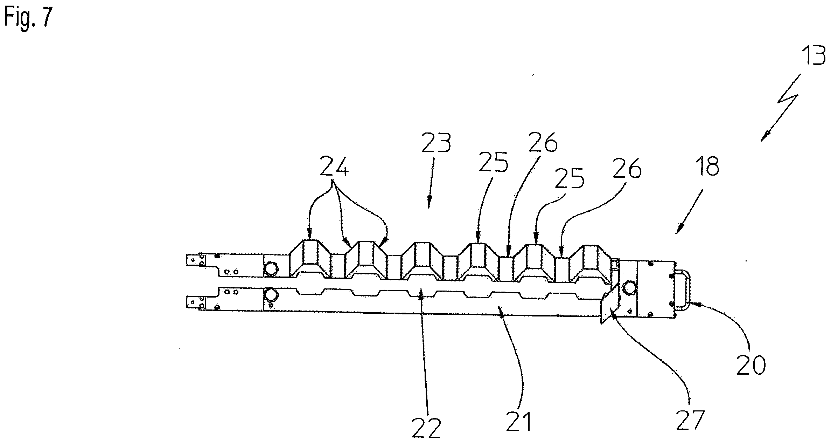

Eine Stabilisiereinrichtung 13 ist in den Fig. 6 und 7 in perspektivischer Ansicht sowie in Ansicht von oben dargestellt und wird nun im Folgenden beschrieben.

Die Stabilisiereinrichtung 13 umfasst zunächst eine Bodengruppe 18, bestehend aus einem Rahmen 19 mit frontseitig angeordnetem Handgriff 20 und einem Bodenelement 21, hier in Form einer Bodenplatte, welches auf dem Rahmen lösbar festgelegt ist. Der Rahmen 19 ist hier U-förmig ausgestaltet, wobei das offene Ende des Rahmens 19 dem Handgriff 20 abgewandt ist. Der Rahmen 19 ist schubladenartig ausziehbar in dem Puffermagazin 12 angeordnet, beispielsweise über ein Teleskopschienensystem.

Das Bodenelement 21 ist ebenfalls U-förmig ausgebildet und mit mehreren Öffnungen 22 versehen, die den Durchtritt eines später zu beschreibenden Ausförderwerkzeuges einer Entnahmeeinrichtung 28 dienen.

Auf der Bodengruppe 18, hier konkret auf dem Bodenelement 21, ist ebenfalls abnehm- und austauschbar ein gekantetes Blech 23 angeordnet, welches Schachtwände 24 von Aufnahmeschächten 25 für Stülpdeckel bildet. Die Aufnahmeschächte 25 sind in einer ersten Richtung X in Reihe neben- bzw. hintereinander angeordnet, wobei die erste Richtung X parallel zu einer Auszugrichtung der Stabilisiereinrichtung 13 angeordnet ist. Die Aufnahmeschächte 25 sind als Halbzylinder ausgebildet, wie sie bei einer vertikalen Teilung eines Zylinders entstehen. Jeder Aufnahmeschacht 25 weist hier die Form eines hälftig geteilten, hexagonalen Zylinders auf. Die einzelnen Aufnahmeschächte 25 sind untereinander über Materialstege 26 verbunden, die ebenfalls vom Blech 23 ausgebildet sind. Auf diese Weise lassen sich die Aufnahmeschächte 25 einfach aus einem einzigen Blech 23 kanten und bilden quasi gemeinsam ein Bauteil.

Die Ausbildung als gemeinsames oder einstückiges Bauteil hat insbesondere beim sogenannten Formatwechsel, dem Wechsel zwischen Behälterteilen, hier Stülpdeckeln unterschiedlicher Formate, den Vorteil einer einfachen Austauschbarkeit. Es ist jedoch nicht zwingend, die Aufnahmeschächte 25 aus einem einzigen Blech 23 zu kanten. Sie können, wenn dies sinnvoll erscheint, auch einzeln gefertigt und untereinander unverbunden auf der Bodengruppe 18 befestigt werden. Ebenso ist es möglich, abweichende Materialien, wie beispielsweise Kunststoffe zur Herstellung der Aufnahmeschächte 25 zu nutzen.

Eine Besonderheit zeigt der vordere, griffnahe Aufnahmeschacht 25. Dieser ist in etwa nach Art eines Dreiviertelzylinders ausgebildet und verfügt über eine quer zur Auszugrichtung X gerichtete Schachtwand 27. Diese Schachtwand 27 bildet einen Eingriffschutz, so dass bei in dem Puffermagazin 12 befindlicher, eingeschobener Stabilisiereinrichtung 13 nicht in den Bereich der Aufnahmeschächte 25 hineingegriffen werden kann.

Um die später beschriebene Ausförderung der Stülpdeckelstapel zu gewährleisten, sind die Öffnungen 22 im Bodenbereich eines jeden Aufnahmeschachtes 25 angeordnet.

Jeder Aufnahmeschacht 25 dient der Aufnahme eines Stülpdeckelstapels, dessen Stapelzustand durch Anlage an den Schachtwänden 24 stabil ist. Insbesondere stabilisieren die Schachtwände 24 den Stapelzustand gegen quer zur Stapelrichtung, hier also im Wesentlichen horizontal gerichtete Kräfte, wie sie beispielsweise bei der später noch zu beschreibenden Förderbewegung der Stabilisiereinrichtungen 13 auftreten.

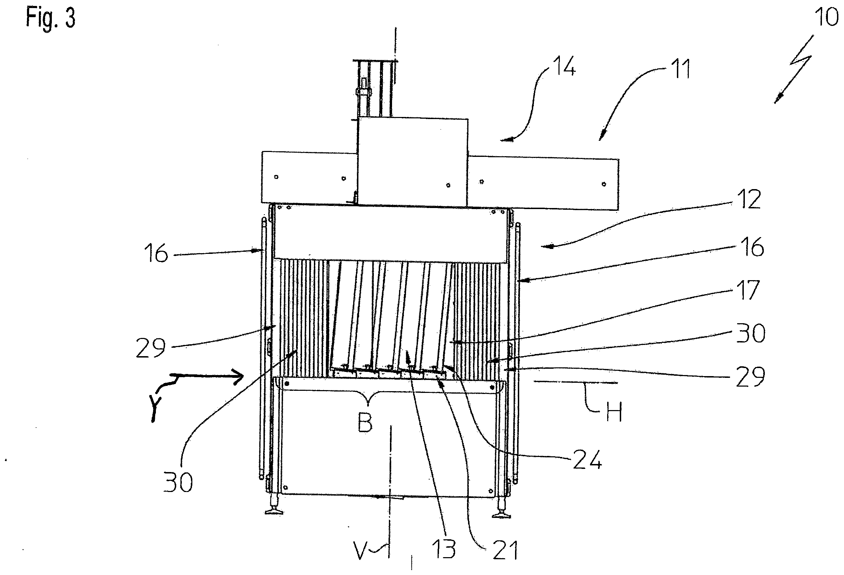

Wie aus den Fig. 1 bis 4 ersichtlich ist, sind mehrere Stabilisiereinrichtungen 13 in einer Horizontalebene H (Fig. 3) nebeneinander in dem Puffermagazin 12 angeordnet und über das Ausziehfenster 17 für eine Bedienperson zugänglich. Die Aufnahmeschächte 25 jeweils einer Stabilisiereinrichtung 13 sind entlang der Auszugrichtung X der Stabilisiereinrichtung 13 hintereinander angeordnet. Dadurch ergibt sich insbesondere eine flächige Anordnung der Aufnahmeschächte 25 im Puffermagazin 12, was beispielsweise in Fig. 1 gezeigt ist. Die Stabilisiereinrichtungen 13 sind entlang einer sich über in etwa die gesamte Ausziehfensterbreite erstreckenden Bewegungsbahn B in einer zweiten Richtung Y linear beweglich, wobei die Bewegung bevorzugt parallel zur Bewegung von Tragelementen der Abfüllvorrichtung ausgerichtet ist. Der Winkel zwischen der ersten Richtung X und der zweiten Richtung Y, die gemäß Fig. 3 parallel zur Bewegungsbahn B angeordnet ist, beträgt im vorliegenden Ausführungsbeispiel 90°.

Die Stabilisiereinrichtungen 13 sind quer zur Bewegungsbahn B bzw. quer zur zweiten Richtung Y entlang der Auszugrichtung X aus dem Ausziehfenster 17 ausziehbar, wofür der Handgriff 20 ausziehfensternah positioniert ist. Eine ausgezogene Stabilisiereinrichtung 13 bzw. deren Aufnahmeschächte 25 kann auf diese Weise einfach und rasch mit Stülpdeckelstapeln oder ggf. anderen, in Stapelform aufgeschichteten Behälterteilen befüllt werden. Nach anschließenden Einschieben der Stabilisiereinrichtung 13 in das Puffermagazin 12 stehen die Stülpdeckelstapel für eine später zur beschreibende Entnahme bereit.

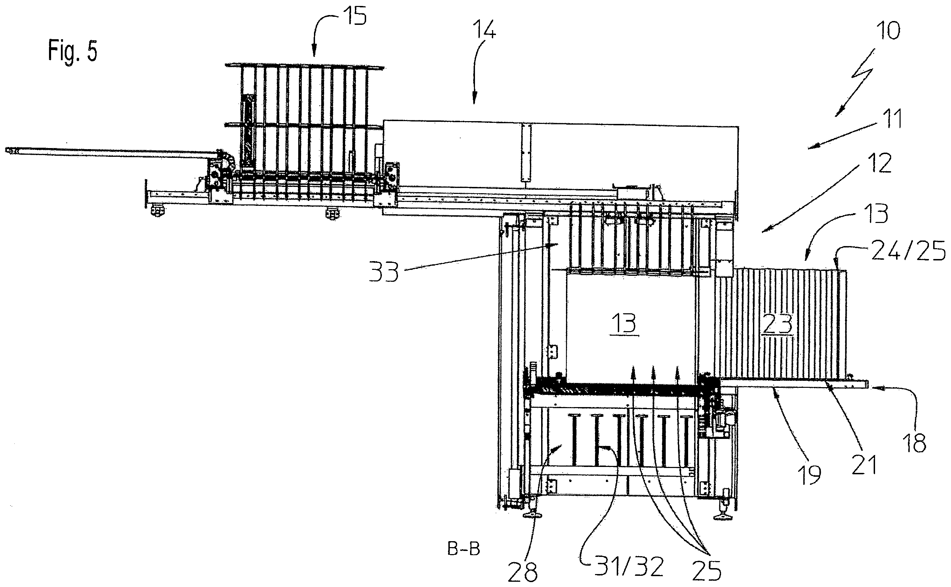

In einer sich etwa parallel zur Auszugrichtung X erstreckenden Vertikalebene V (Fig. 3) befindet sich eine lediglich in Fig. 5 erkennbare und insgesamt mit der Bezugsziffer 28 versehene Entnahmeeinrichtung, die der Ausförderung der Stülpdeckelstapel in die vorerwähnten Zuführrahmen 15 dient. Um zu gewährleisten, dass jede Stabilisiereinrichtung 13 auf ihrem Weg entlang der Bewegungsbahn B in den Wirkbereich der Entnahmeeinrichtung 28 gelangt, ist beidseitig der Vertikalebene V ausreichend Bewegungsraum vorhanden. Bevorzugt entspricht die Gesamtlänge der Bewegungsbahn B in etwa der zweifachen Summe der quer zur Auszugsrichtung X gemessenen Bodengruppenbreiten der einzelnen Stabilisiereinrichtungen 13.

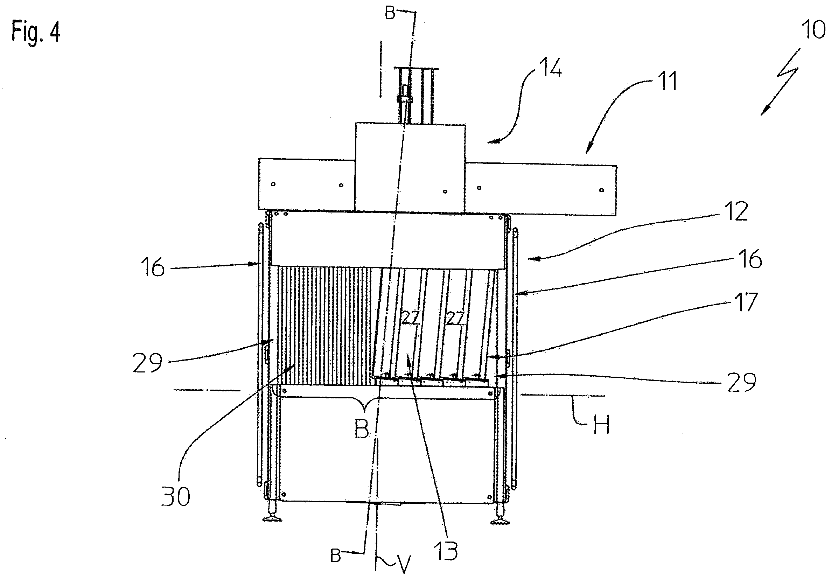

Wie insbesondere die Fig. 3 und 4 zeigen, weisen die Schachtwände 24 der Aufnahmeschächte 25 eine Neigung auf. Diese ist gegenüber einer im Einzelnen nicht dargestellten, im Bereich der Aufnahmeschachteinsetzöffnung angeordneten Vertikalebene V ausgestellt bzw. wegweisend, wobei im Hinblick auf Fig. 3 die dort eingezeichnete Vertikalebene V im Hinblick auf die mittlere Stabilisiereinrichtung 13 als eine solche Vertikalebene angesehen werden kann. Eine korrespondierende Neigung weisen die Bodenelemente 21 gegenüber der Horizontalen H der Bewegungsbahn B auf. Dies führt dazu, dass die in den einzelnen Aufnahmeschächten 25 der Stabilisiereinrichtung 13 einsitzenden Stülpdeckelstapel allein durch Schwerkraft gegen die Schachtwände 24 kippen und dort sicher gehalten sind.

Bei einer vergleichenden Betrachtung der Fig. 3 und 4 lässt sich feststellen, dass die einen zusammenhängenden Block bildenden Stabilisiereinrichtungen 13 zwischen deren Ausgangsstellung in Fig. 3 und deren erreichter Stellung in Fig. 4 im Hinblick auf die Zeichnungsebene nach rechts bewegt wurden. In Fig. 3 lag die mittlere Stabilisiereinrichtung 13 im Bereich der Vertikalebene V. Durch eine Verlagerung um einen in etwa zwei bodengruppenbreiten entsprechenden Wegbetrag nach rechts kommt nunmehr die linke Stabilisiereinrichtung 13 in der Vertikalebene V zur Anordnung. Ausgehend von Figur 4 kann nunmehr eine Rückverlagerung der Stabilisiereinrichtungen 13 nach in Bezug auf die Darstellungsebene links erfolgen, so dass nacheinander jeweils eine Stabilisiereinrichtung 13 im Bereich der Vertikalebene V und insbesondere der dort angeordneten Entnahmeeinrichtung 28 zur Anordnung kommt, bis die Bewegung nach links mit der Anordnung der rechten Stabilisiereinrichtung 13 in der Vertikalebene V abgeschlossen ist. Zum Schutz der Bedienperson vor Fehlbedienung und daraus resultierender Verletzung aber auch zum Schutz der Zuführeinrichtung 10 vor dem Eindringen von den Anlagebetrieb störenden Fremdkörpern ist das Ausziehfenster 17, durch welches die Bedienperson Zugang zu den Stabilisiereinrichtungen 13 zwecks Befüllen mit Stülpdeckeln hat, mit Einrichtungen zum Eingriffsschutz versehen.

Zunächst wird der Eingriffsschutz durch die quer zur Auszugrichtung X bzw. im Wesentlichen parallel zur Bewegungsrichtung entlang der Bewegungsbahn B ausgerichteten, griffnahen Schachtwände 27 der einzelnen Stabilisiereinrichtungen 13 gebildet. Diese verhindern über die jeweils volle Breite einer Stabilisiereinrichtung 13 den Eingriff in den Bereich der Aufnahmeschächte 25. Die Anordnung der Stabilisiereinrichtungen 13 nebeneinander zu einem in seiner Gesamtheit zu bewegenden Block bildet somit einen Eingriffsschutz, der eine erhebliche Breite des Ausziehfensters 17 überspannt.

Durch das Wandern der Stabilisiereinrichtungen 13 entlang der Bewegungsbahn B verbleibt jedoch zwischen der jeweiligen seitlichen 20 Ausziehfensterbegrenzung, hier jeweils gebildet durch eine Stütze 29 und der ersten bzw. letzten Stabilisiereinrichtung 13 ein Freiraum. Dieser ist in seiner entlang der Bewegungsbahn B gemessenen Länge darüber hinaus einer ständigen Größenveränderung unterworfen, da die Stabilisiereinrichtungen 13 entlang der Bewegungsbahn B kontinuierlich von links nach rechts und von rechts nach links wandern. Deshalb sieht die Erfindung hier einen längenvariablen Eingriffsschutz vor, der in der konkreten Ausführungsform als plisseeartig, faltbarer Vorhang 30 ausgebildet ist. Im Grunde genommen handelt es sich, wie anhand der Fig. 3 zu erkennen ist, um zwei solcher Vorhänge 30, die jeweils eine Bewegungskopplung mit der linken bzw. rechten Stabilisiereinrichtung 13 eingehen und während der Bewegung ausgezogen bzw. eingeschoben werden. Hierzu verfügt das Ausziehfenster 17 über bewegungsbahnparallele Führungsschienen an der Ober- bzw. Unterseite der Fensteröffnung. Ein solcher längenvaribaler Eingriffsschutz kann alternativ beispielsweise auch als Rollo ausgebildet sein.

Fig. 5 ist eine Schnittdarstellung gemäß Schnittlinie B-B in Fig. 4 und dient insbesondere der Illustration der Entnahmeeinrichtung 28, von welcher hier lediglich die Ausförderwerkzeuge 31 in Form von Entnahmestempeln 32 dargestellt sind.

Die Entnahmestempel 32 fluchten mit den Öffnungen 22 des Bodenelementes 21 (siehe Fig. 6 und 7), wenn eine der dargestellten Stabilisiereinrichtungen 13 im Bereich der Entnahmeeinrichtung 28 angeordnet ist. Die oberhalb der Öffnungen 22 angeordneten Stülpdeckelstapel können bei einer Aufwärtsbewegung der Entnahmestempel 32 von selbigen nach Durchtritt durch die Öffnung 22 in Richtung nach oben mitgenommen und in Richtung Transportbrücke 14 bewegt werden. Oberhalb der Stabilisiereinrichtung 13 ist zunächst ein Leitgestell 33 angeordnet, welches den hier vorhandenen Zwischenraum zwischen der Oberkante der Aufnahmeschächte 25 und der Transportbrücke 14 überbrückt. Oberhalb des Leitgestells 33 ist bei Ausförderung der Stülpdeckelstapel aus den Stabilisiereinrichtungen 13 ein Zuführrahmen 15 angeordnet, in welchen die Stülpdeckelstapel nebeneinander eingefördert werden.

### Funktion der Erfindung:

Die erfindungsgemäße Zuführeinrichtung 10 steht in der hier dargestellten Ausführungsform seitlich einer Abfüllvorrichtung für Behälter neben der sogenannten Deckelaufsetzstation. Diese wird von der Zuführeinrichtung 10 mit zu den befüllten Behältern genutzten Stülpdeckeln beschickt. Die Bewegungsbahn B der Stabilisiereinrichtungen 13 ist parallel zur Vorzugsrichtung der Tragelemente in der Abfüllvorrichtung ausgerichtet. Die Transportbrücke 14 überbrückt den Abstand zwischen der Zuführeinrichtung 10 und der nicht dargestellten Abfüllvorrichtung.

Eine Bedienperson zieht nacheinander in Auszugrichtung X Stabilisiereinrichtungen 13 aus dem Ausziehfenster 17 des Puffermagazins 12 heraus und bestückt deren Aufnahmeschächte 25 mit stapelweise angeordneten Stülpdeckeln. Dabei entspricht die Anzahl nebeneinander in der Stabilisiereinrichtung 13 gehaltenen gehaltenen Stülpdeckelstapel der Anzahl nebeneinander angeordneter Becher in einem Tragelement 10 der Abfüllvorrichtung.

Bei der Erstbefüllung vor Inbetriebnahme der Anlage kann auch die im Wirkbereich der Entnahmeeinrichtung 28 angeordnete Stabilisiereinrichtung 13 in Auszugrichtung X ausgezogen werden. Spätestens im laufenden Anlagebetrieb ist jedoch die jeweils dort positionierte Stabilisiereinrichtung 13 für einen Auszug in Richtung X gesperrt, da ansonsten Verletzungsgefahr sowie die Gefahr einer Störung des Ausförderns der Stülpdeckelstapel besteht. Zumindest ein Zuführrahmen 15 ist oberhalb der Entnahmeeinrichtung 28 angeordnet, um Stülpdeckelstapel aufzunehmen.

Mit Anlauten der Abfüllvorrichtung wird auch die Zuführeinrichtung 10 in Funktion gesetzt. Die Entnahmestempel 32 der Entnahmeeinrichtung 28 verfahren vertikal nach oben, durchtreten die Öffnungen 22 der Bodenelemente 21 der dort angeordneten Stabilisiereinrichtung 13. Sie dringen in die Aufnahmeschächte 25 ein und fördern die dort befindlichen Stülpdeckelstapel über das Leitgestell 33 in den oberhalb angeordneten Zuführrahmen 15 ein. Sodann werden die Entnahmestempel 32 in ihre unterhalb der Bodenelemente 21 gelegene Ausgangsstellung zurückverfahren.

Der Zuführrahmen 15 verfährt von seiner puffereinhausungsnahen Endstellung in seine abfüllvorrichtungsnahe Endstellung, in welcher er im Bereich der Deckelaufsetzstation angeordnet ist und diese mit Stülpdeckeln aus den aufgenommenen Stülpdeckelstapeln beschicken kann. Im Gegenzug verfährt ein zweiter Zuführrahmen in Gegenrichtung in die puffereinhausungsnahe Endposition oberhalb der Entnahmeeinrichtung 28. Die blockweise, zusammengefassten Stabilisiereinrichtungen 13 bewegen sich um die Breite einer Bodengruppe 18 entlang der Bewegungsbahn B entweder nach links oder nach rechts, so dass die nächste, mit Stülpdeckelstapeln befüllte Stabilisiereinrichtung 13 in den Wirkbereich der Entnahmeeinrichtung 28 gelangt.

Bei der Verlagerung der blockweise, zusammengefassten Stabilisiereinrichtungen 13 entlang der Bewegungsbahn B bleibt der vorerwähnte Eingriffsschutz, realisiert in einer konkreten Ausführungsform durch plisseeartig ausgestaltete Vorhänge 30, erhalten, indem diese die jeweils freien, also nicht von Stabilisiereinrichtungen 13 blockierten Bereiche des Ausziehfensters 17 abdecken und mit den Stabilisiereinrichtungen 13 bewegungsgekoppelt entlang der Bewegungsbahn B wandern.

Nachdem die Entnahmestempel 32 in ihre unterhalb der Bodengruppe 18 der Stabilisiereinrichtung 13 angeordnete Ursprungsposition zurückverfahren wurden, werden die Stabilisiereinrichtungen 13 nunmehr um die Breite einer Bodengruppe nach links oder rechts verlagert, so dass eine weitere, mit Stülpdeckelstapeln befüllte Stabilisiereinrichtung 13 in den Wirkbereich der Entnahmeeinrichtung 28 gelangt. Mit einer erneuten Ausförderbewegung der Entnahmestempel 32 beginnt der vorbeschriebene Vorgang von vorn.

Während des Betriebs der Zuführeinrichtung 10 lässt sich jederzeit jede Stabilisiereinrichtung 13 in Auszugsrichtung X verlagern, um Stülpdeckelstapel in die Aufnahmeschächte 25 entleerter Stabilisiereinrichtungen 13 einzulegen. Eine Ausnahme bildet lediglich diejenige Stabilisiereinrichtung 13, welche sich im jeweiligen Arbeitszyklus im Wirkbereich der Entnahmeeinrichtung 28 befindet.

Darüber hinaus detektiert die Zuführeinrichtung 10 in einer weiteren Ausführungsform diejenigen Stabilisiereinrichtungen 13, welche mit Stülpdeckelstapeln bestückt sind, so dass entleerte und noch nicht wiederbefüllte Stabilisiereinrichtungen 13 durch beispielsweise doppelschrittige Bewegung der blockweise, zusammengefassten Stabilisiereinrichtungen 13 übergangen werden und so sichergestellt ist, dass ausschließlich befüllte Stabilisiereinrichtungen 13 in den Bereich der Entnahmeeinrichtung 28 gelangen. Statt eines Doppelschrittes ist auch eine Bewegungsumkehr möglich, ohne dass ein vollständiger Durchlauf der Stabilisiereinrichtungen 13 entlang der Bewegungsbahn B stattgefunden hätte.

Dies hat den wesentlichen Vorteil, dass bei der Bestückung der Stabilisiereinrichtungen 13 mit Stülpdeckelstapeln keine vordefinierte Reihenfolge, möglicherweise auch noch in Abhängigkeit der jeweiligen Bewegungsrichtung, eingehalten werden muss. Vielmehr kann die Befüllung beliebig erfolgen, was den kurzzeitigen Einsatz der Bedienperson in anderen Bereichen der Abfüllvorrichtung ohne weiteres ermöglicht.

Vorgesehen ist ferner, dass die Stabilisiereinrichtungen 13 mit einer geeigneten Anzeige versehen sind, die über den Befüllstatus (befüllt/nicht befüllt) Auskunft geben. Dies können beispielsweise schlichte, schlitzartige Freischnitte in den vorderen, griffnahen, quer zur Auszugrichtung X angeordneten Schachtwänden 27 sein. Ebenso sind jedoch auch andere optische Anzeigen, wie Lichtsignale oder ähnliches möglich.

Der wesentliche Vorteil der erfindungsgemäßen Zuführeinrichtung 10 liegt darin, erstmals lediglich instabil stapelbare Behälterteile, wie insbesondere Stülpdeckel, an einer Abfüllvorrichtung für Behälter umfangreich zu bevorraten, so dass ein kontinuierliches Nachlegen von Stülpdeckeln für den reibungslosen Betrieb der Abfüllvorrichtung nicht länger erforderlich ist. Vielmehr kann nach Auffüllen des Puffermagazins 12 die bedienende Person auch an anderen Stationen eingesetzt werden. Die Stapel selbst lassen sich ohne Gefahr einer Stapeltrennung einer Entnahmeeinrichtung 28 zuführen, so dass ein Maschinenstopp wegen fehlender Beschickung mit Behälterteilen, insbesondere Stülpdeckeln nicht länger zu befürchten ist.

## Patentansprüche

1. Zuführeinrichtung (10) für Behälterteile zur Verwendung an einer Vorrichtung zum Befüllen von Behältern mit flüssigen bis pastösen und/oder riesel- und schüttfähigen Nahrungsmitteln,
- mit einer Stabilisiereinrichtung (13), welche in einer ersten Richtung (X) in Reihe hintereinander angeordnete Aufnahmeschächte (25) aufweist, die mit einer schachtlängsaxialen Einsetzöffnung (22) versehen sind, durch welche Stapel von ineinander nestbaren Behälterteilen in die Aufnahmeschächte (25) einbringbar sind, so dass in je einem Aufnahmeschacht (25) ein Behälterteilestapel gehalten ist,
- mit einer Entnahmeeinrichtung (28), die die in den Aufnahmeschächten (25) der Stabilisiereinrichtung (13) in Stapeln gehaltenen Behälterteile gemeinsam ausfördert und in einem Zuführrahmen (15) anordnet,
- wobei mehrere Stabilisiereinrichtungen (13) vorgesehen sind, die gemeinsam ein mit ineinander nestbaren Behälterteilen befüllbares Puffermagazin (12) bilden,
- wobei die Stabilisiereinrichtungen (13) entlang einer gemeinsamen Bewegungsbahn (B) in einer zweiten Richtung (Y) hintereinander angeordnet sind und
- wobei die Stabilisiereinrichtungen (13) entlang der Bewegungsbahn (B) linear verfahrbar sind, um zumindest eine mit Behälterteilen versehene Stabilisiereinrichtung (13) im Wirkbereich der Entnahmeeinrichtung (28) anzuordnen,
- wobei die erste Richtung (X), in der die Aufnahmeschächte (25) einer der Stabilisierungseinrichtungen (13) hintereinander angeordnet sind, ungleich der zweiten Richtung (Y) ist, in der die Bewegungsbahn (B) verläuft,
**dadurch gekennzeichnet, dass** die Zuführeinrichtung (10) enthält:
- Zuführrahmen (15), die sich wechselweise im Bereich der Entnahmeeinrichtung (28) befinden, um die aus der Stabilisiereinrichtung (13) in Form von nebeneinander angeordneten Stapeln ausgeförderten Behälterteile aufzunehmen und der Vorrichtung zum Befüllen von Behältern zuzuführen.

2. Zuführeinrichtung nach Anspruch 1, **dadurch gekennzeichnet, dass** der Winkel zwischen der ersten Richtung (X) und der zweiten Richtung (Y) zwischen 45° und 135° beträgt.

3. Zuführeinrichtung nach Anspruch 1 oder 2, **dadurch gekennzeichnet, dass** die Stabilisiereinrichtungen (13) jeweils einzeln vorzugsweise in etwa quer zur gemeinsamen Bewegungsbahn (B) ausziehbar sind, um die Einsetzöffnungen (22) der Aufnahmeschächte (25) zugänglich zu machen.

4. Zuführeinrichtung nach einem der der vorhergehenden Ansprüche, **dadurch gekennzeichnet, dass** das Puffermagazin (12) in einem Maschinengestell (11) angeordnet ist, welches einen Zugang zu den Stabilisiereinrichtungen (13) über ein Ausziehfenster (17) gewährleistet und/oder dass das Puffermagazin (12) eine flächige Anordnung der darin befindlichen Aufnahmeschächte (25) aufweist.

5. Zuführeinrichtung nach Anspruch 4, **dadurch gekennzeichnet, dass** die Breite des Ausziehfensters (17) wenigstens der Länge der Bewegungsbahn (B) der Stabilisiereinrichtungen (13) entspricht.

6. Zuführeinrichtung nach Anspruch 4 oder 5, **dadurch gekennzeichnet, dass** das Ausziehfenster (17) über einen Eingriffsschutz (27) verfügt, der einen Eingriff eines Benutzers in die Bewegungsbahn (B) der Stabilisiereinrichtungen (13) verhindert.

7. Zuführeinrichtung nach Anspruch 6, **dadurch gekennzeichnet, dass** der Eingriffsschutz (27) längenvariabel ausgestaltet ist, um die auf Grund der Bewegung der Stabilisiereinrichtungen (13) jeweils in ihrer Länge veränderlichen Ausziehfensterfreiräume zwischen einem Ausziehfensterrahmenteil und der entlang der Bewegungsbahn (B) ersten beziehungsweise letzten Stabilisiereinrichtung (13) geschlossen zu halten.

8. Zuführeinrichtung nach Anspruch 6 oder 7, **dadurch gekennzeichnet, dass** der Eingriffsschutz (27) als Rollo oder plisseeartiger Vorhang (30) ausgebildet ist, der an einem Rahmen des Ausziehfensters (17) einerseits und an der ersten bzw. letzten Stabilisiereinrichtung (13) andererseits angeschlagen ist und im Übrigen bevorzugt in zwei bewegungsbahnparallelen, den Eingriffsschutz (27) zwischen sich aufnehmenden Führungsschienen gelagert ist.

9. Zuführeinrichtung nach Anspruch 6, **dadurch gekennzeichnet, dass** die Schachtwand (27) des zuführfensternahen Aufnahmeschachtes (25) einer jeden Stabilisiereinrichtung (13) den Eingriffsschutz (27) bildet, indem die Schachtwand (27) den Eingriff eines Benutzers in die Bewegungsbahn (B) der Stabilisiereinrichtungen (13) über die bewegungsbahnparallel gemessene Breite der jeweiligen Stabilisiereinrichtung (13) verhindert.

10. Zuführeinrichtung nach einem der vorhergehenden Ansprüche, **dadurch gekennzeichnet, dass** die Stabilisiereinrichtung (13) ein Bodenelement (21) umfasst, auf welchem die Aufnahmeschächte (25) angeordnet sind.

11. Zuführeinrichtung nach einem der vorhergehenden Ansprüche, **dadurch gekennzeichnet, dass** die Aufnahmeschächte (25) im Wesentlichen als durch vertikale Teilung entstandener Halbzylinder ausgebildet sind und insbesondere die Form eines hälftig geteilten, hexagonalen Zylinders aufweisen.

12. Zuführeinrichtung nach einem der vorhergehenden Ansprüche, **dadurch gekennzeichnet, dass** die Aufnahmeschächte (25) einer Stabilisiereinrichtung (13), insbesondere als Halbzylinder, durch Materialstege (26) untereinander verbunden sind und insbesondere aus einem Materialstück geformt, bevorzugt aus einem Blechstück (23) gekantet sind.

13. Zuführeinrichtung nach einem der vorhergehenden Ansprüche, **dadurch gekennzeichnet, dass** der in Auszugrichtung (X) vorn liegende Aufnahmeschacht (25) mit einer insbesondere die quer zur Auszugrichtung (X) gemessene Breite des Bodenelementes (21) überspannenden Blende versehen ist, die als Eingriffsschutz (27) dient.

14. Zuführeinrichtung nach Anspruch 13, **dadurch gekennzeichnet, dass** die Blende (27) Teil des Zylindermantels ist und der in Auszugsrichtung (X) vorn liegende Aufnahmezylinder in etwa als Dreiviertelzylinder ausgebildet ist.

15. Zuführeinrichtung nach Anspruch 10, **dadurch gekennzeichnet, dass** das Bodenelement (21) im Bereich eines jeden Aufnahmeschachtes (25) eine Öffnung (22) für den Durchtritt eines Ausförderwerkzeugs (31) der Entnahmeeinrichtung (28) ausbildet.

16. Zuführeinrichtung nach einem der vorhergehenden Ansprüche, **dadurch gekennzeichnet, dass** die Schachtwände (24) der Aufnahmeschächte (25) von einer im Bereich der Einsetzöffnung (22) angeordneten, vertikalen Ebene (V) wegweisend geneigt sind.

17. Zuführeinrichtung nach Anspruch 16, **dadurch gekennzeichnet, dass** die Neigung der Schachtwände (24) durch eine Neigung des mit den Schachtwänden (24) verbundenen Bodenelementes (21) gegenüber der Horizontalen der Bewegungsbahn (B) hervorgerufen 20 ist.

18. Zuführeinrichtung nach einem der vorhergehenden Ansprüche, **dadurch gekennzeichnet, dass** das Bodenelement (21) und/oder die Aufnahmeschächte (25) auswechselbar auf einem ausziehbaren Rahmen (19) angeordnet ist.

19. Zuführeinrichtung nach einem der vorhergehenden Ansprüche, **dadurch gekennzeichnet, dass** eine Auszugssperre vorgesehen ist, die den Auszug der sich im Wirkbereich der Entnahmeeirichtung (28) befindlichen Stabilisiereinrichtung (13) verhindert.

20. Zuführeinrichtung nach einem der vorhergehenden Ansprüche, **dadurch gekennzeichnet, dass** die Bewegungsrichtung der Stabilisiereinrichtungen (13) entlang ihrer Bewegungsbahn (B) parallel zur Vorzugseinrichtung der Vorrichtung zum Befüllen der Behälter ausgerichtet ist.

## Claims

1. A feed device (10) for container parts to use on a device for filling containers with fluid to pasty and/or free-flowing and pourable foods, comprising
- a stabilization device (13), which has receiving shafts (25) arranged in a row one after the other in a first direction (X), which are provided with a shaft length axial insertion opening (22), through which stacks of nestable container parts can be introduced into the receiving shafts (25), so that one container part stack per receiving shaft (25) is held,
- a removal device (28), which jointly moves out the container parts held in stacks in the receiving shafts (25) of the stabilization device (13) and arranges them in a feed frame (15),
- wherein a plurality of stabilization devices (13) is provided, which together form a buffer magazine (12) which can be filled with nestable container parts,
- wherein the stabilization devices (13) are arranged one after the other along a common movement path (B) in a second direction (Y) and
- wherein the stabilization devices (13) can be moved linearly along the movement path (B), in order to arrange at least one stabilization device (13) provided with container parts in the active region of the removal device (28),
- wherein the first direction (X), in which the receiving shafts (25) of one of the stabilization devices (13) are arranged one after the other is unequal to the second direction (Y), in which the movement path (B) runs, **characterized in that** the feed device (10) contains:
- feed frames (15), which are reciprocally located in the region of the removal device (28), in order to receive the container parts moved out of the stabilization device (13) in the form of stacks arranged next to one another and to feed the device for filling containers.

2. The feed device according to claim 1, **characterized in that** the angle between the first direction (X) and the second direction (Y) is between 45° and 135°.

3. The feed device according to claim 1 or 2, **characterized in that** the stabilization devices (13) are each individually extractable preferably roughly perpendicular to the common movement path (B), in order to make the insertion openings (22) of the receiving shafts (25) accessible.

4. The feed device according to any of the foregoing claims, **characterized in that** the buffer magazine (12) is arranged in a machine frame (11), which ensures an access to the stabilization devices (13) via a pullout window (17) and/or that the buffer magazine (12) has a planar arrangement of the receiving shafts (25) located within.

5. The feed device according to claim 4, **characterized in that** the width of the pullout window (17) corresponds at least to the length of the movement path (B) of the stabilization devices (13).

6. The feed device according to claim 4 or 5, **characterized in that** the pullout window (17) has a finger guard (27) which prevents an intervention of a user in the movement path (B) of the stabilization devices (13).

7. The feed device according to claim 6, **characterized in that** the finger guard (27) is designed with variable length, in order to hold closed the pullout window open spaces, which due to the movement of the stabilization devices (13) are each variable in their length between a pullout window frame part and the first or last stabilization device (13) along the movement path (B).

8. The feed device according to claim 6 or 7, **characterized in that** the finger guard (27) is embodied as a roller blind or pleated curtain (30), which is fastened to a frame of the pullout window (17) on the one hand and to the first or the last stabilization device (13) on the other hand and in other respects is preferably supported in two guide rails parallel to the movement path receiving the finger guard (27) between them.

9. The feed device according to claim 6, **characterized in that** the shaft wall (27) of the receiving shaft (25) close to the feed window forms the finger guard (27) of each stabilization device (13), **in that** the shaft wall (27) prevents the intervention of a user into the movement path (B) of the stabilization devices (13) over the measured width parallel to the movement path of the respective stabilization device (13).

10. The feed device according to any of the foregoing claims, **characterized in that** the stabilization device (13) comprises a base element (21), upon which the receiving shafts (25) are arranged.

11. The feed device according to any of the foregoing claims, **characterized in that** the receiving shafts (25) are embodied substantially as half cylinders that develop by vertical partition and in particular have the shape of an equally partitioned, hexagonal cylinder.

12. The feed device according to any of the foregoing claims, **characterized in that** the receiving shafts (25) of a stabilization device (13), in particular as half cylinders, are connected to one another by material webs (26) and in particular are formed from a material piece, preferably bent from a sheet metal (23).

13. The feed device according to any of the foregoing claims, **characterized in that** the receiving shaft (25) lying in front in extraction direction (X) is provided with a diaphragm in particular traversing the measured width of the base element (21) perpendicular to the extraction direction (X), which serves as finger guard (27).

14. The feed device according to claim 13, **characterized in that** the diaphragm (27) is part of the cylinder surface and the receiving cylinder lying in front in extraction direction (X) is embodied roughly as a three-quarter cylinder.

15. The feed device according to claim 10, **characterized in that** the base element (21) forms an opening (22) in the region of each receiving shaft (25) for the penetration of an extraction tool (31) of the removal device (28).

16. The feed device according to any of the foregoing claims, **characterized in that** the shaft walls (24) of the receiving shafts (25) inclined pointing away from a vertical plane (V) arranged in the region of the insertion opening (22).

17. The feed device according to claim 16, **characterized in that** the tilting of the shaft walls (24) is caused by a tilting of the base element (21) connected to the shaft walls (24) vis-à-vis the horizontal position of the movement path (B).

18. The feed device according to any of the foregoing claims, **characterized in that** the base element (21) and/or the receiving shafts (25) are interchangeably arranged on an extractable frame (19).

19. The feed device according to any of the foregoing claims, **characterized in that** a pullout stop is provided, which prevents the pullout of the stabilization device (13) located in the active region of the removal device (28).

20. The feed device according to any of the foregoing claims, **characterized in that** the movement direction of the stabilization devices (13) along their movement path (B) is oriented parallel to the pulling device of the device for feeding the containers.

## Revendications

1. Système d'amenée (10) pour des parties de récipients à utiliser sur un dispositif pour le remplissage de récipients de produits alimentaires liquides à pâteux et/ou coulants et déversables, comprenant
- un système de stabilisation (13), lequel présente des puits de réception (25) disposés les uns derrière les autres en rang dans une première direction (X), qui sont pourvus d'une ouverture d'insertion (22) axiale selon la longueur du puits, par laquelle des piles de parties de récipients pouvant être emboîtés les uns dans les autres peuvent être introduites dans les puits de réception (25), de sorte qu'une pile de parties de récipients est maintenue dans chaque puits de réception (25),
- un système de prélèvement (28), qui extrait conjointement les parties de récipients maintenues en piles dans les puits de réception (25) du système de stabilisation (13) et les dispose dans un cadre d'amenée (15),
- dans lequel plusieurs systèmes de stabilisation (13) sont prévus, qui forment conjointement un magasin tampon (12) pouvant être rempli de parties de récipients pouvant être emboîtées les unes dans les autres ;
- dans lequel les systèmes de stabilisation (13) sont disposés les uns derrière les autres le long d'une trajectoire de déplacement (B) commune dans une deuxième direction (Y) et
- dans lequel les systèmes de stabilisation (13) sont déplaçables linéairement le long de la trajectoire de déplacement (B), afin de disposer au moins un système de stabilisation (13) pourvu de parties de récipients dans la zone d'action du système de prélèvement (28),
- dans lequel la première direction (X), dans laquelle les puits de réception (25) d'un des systèmes de stabilisation (13) sont disposés les uns derrière les autres, est différente de la deuxième direction (Y) dans laquelle la trajectoire de déplacement (B) s'étend,
**caractérisé en ce que** le système d'amenée (10) contient :
- des cadres d'amenée (15), qui se trouvent tour à tour dans la zone du système de prélèvement (28), afin de recevoir les parties de récipients extraites du système de stabilisation (13) sous forme de piles disposées les unes à côté des autres et de les amener au dispositif pour le remplissage de récipients.

2. Système d'amenée selon la revendication 1, **caractérisé en ce que** l'angle entre la première direction (X) et la deuxième direction (Y) est compris entre 45° et 135°.

3. Système d'amenée selon la revendication 1 ou 2, **caractérisé en ce que** les systèmes de stabilisation (13) peuvent être sortis respectivement individuellement de préférence à peu près transversalement par rapport à la trajectoire de déplacement (B) commune, afin de rendre les ouvertures d'insertion (22) des puits de réception (25) accessibles.

4. Système d'amenée selon l'une quelconque des revendications précédentes, **caractérisé en ce que** le magasin tampon (12) est disposé dans un bâti de machine (11), lequel garantit un accès aux systèmes de stabilisation (13) par l'intermédiaire d'une fenêtre de sortie (17) et/ou que le magasin tampon (12) présente une disposition plane des puits de réception (25) se trouvant dans celui-ci.

5. Système d'amenée selon la revendication 4, **caractérisé en ce que** la largeur de la fenêtre de sortie (17) correspond au moins à la longueur de la trajectoire de déplacement (B) des systèmes de stabilisation (13).

6. Système d'amenée selon la revendication 4 ou 5, **caractérisé en ce que** la fenêtre de déploiement (17) dispose d'une protection contre les interventions (27), qui empêche une intervention d'un utilisateur dans la trajectoire de déplacement (B) des systèmes de stabilisation (13).

7. Système d'amenée selon la revendication 6, **caractérisé en ce que** la protection contre les interventions (27) est conçue de manière variable en longueur, afin de maintenir fermés les espaces libres de fenêtre de sortie respectivement variables dans leur longueur en raison du déplacement des systèmes de stabilisation (13) entre une partie de cadre de fenêtre de sortie et le premier ou dernier système de stabilisation (13) le long de la trajectoire de déplacement (B).

8. Système d'amenée selon la revendication 6 ou 7, **caractérisé en ce que** la protection contre les interventions (27) est réalisée sous la forme d'un store ou rideau (30) du type plissé, qui est accroché sur un cadre de la fenêtre de sortie (17) d'une part et sur le premier ou dernier système de stabilisation (13) d'autre part et du reste est de préférence monté dans deux rails de guidage parallèles à la trajectoire de déplacement, recevant entre eux la protection contre les interventions (27).

9. Système d'amenée selon la revendication 6, **caractérisé en ce que** la paroi de puits (27) du puits de réception (25) proche de la fenêtre d'amenée de chaque système de stabilisation (13) forme la protection contre les interventions (27), du fait que la paroi de puits (27) empêche l'intervention d'un utilisateur dans la trajectoire de déplacement (B) des systèmes de stabilisation (13) sur la largeur mesurée parallèlement à la trajectoire de déplacement du système de stabilisation (13) respectif.

10. Système d'amenée selon l'une quelconque des revendications précédentes, **caractérisé en ce que** le système de stabilisation (13) comprend un élément de fond (21), sur lequel sont disposés les puits de réception (25).

11. Système d'amenée selon l'une quelconque des revendications précédentes, **caractérisé en ce que** les puits de réception (25) sont réalisés sensiblement sous la forme de demi-cylindres obtenus par une division verticale et présentent en particulier la forme d'un cylindre hexagonal, divisé en deux moitiés.

12. Système d'amenée selon l'une quelconque des revendications précédentes, **caractérisé en ce que** les puits de réception (25) d'un système de stabilisation (13), en particulier en tant que demi-cylindres, sont reliés entre eux par des éléments jointifs de matière (26) et en particulier formés d'un morceau de matière, de préférence repliés à partir d'une pièce de tôle (23).

13. Système d'amenée selon l'une quelconque des revendications précédentes, **caractérisé en ce que** le puits de réception (25) situé à l'avant dans la direction de sortie (X) est pourvu d'un cache recouvrant en particulier la largeur de l'élément de fond (21) mesurée transversalement par rapport à la direction de sortie (X), qui sert de protection contre les interventions (27).

14. Système d'amenée selon la revendication 13, **caractérisé en ce que** le cache (27) fait partie de l'enveloppe de cylindre et le cylindre de réception situé à l'avant dans la direction de sortie (X) est réalisé à peu près sous la forme d'un cylindre trois-quarts.

15. Système d'amenée selon la revendication 10, **caractérisé en ce que** l'élément de fond (21) réalise dans la zone de chaque puits de réception (25) une ouverture (22) pour le passage d'un outil d'extraction (31) du système de prélèvement (28).

16. Système d'amenée selon l'une quelconque des revendications précédentes, **caractérisé en ce que** les parois de puits (24) des puits de réception (25) sont inclinées de manière à s'éloigner d'un plan vertical (V) disposé dans la zone de l'ouverture d'insertion (22).

17. Système d'amenée selon la revendication 16, **caractérisé en ce que** l'inclinaison des parois de puits (24) est provoquée par une inclinaison de l'élément de fond (21) relié aux parois de puits (24) par rapport à l'horizontale de la trajectoire de déplacement (B).

18. Système d'amenée selon l'une quelconque des revendications précédentes, **caractérisé en ce que** l'élément de fond (21) et/ou les puits de réception (25) sont disposés de manière interchangeable sur un cadre (19) pouvant être sorti.

19. Système d'amenée selon l'une quelconque des revendications précédentes, **caractérisé en ce qu'**un dispositif de blocage de sortie est prévu, qui empêche la sortie du système de stabilisation (13) se trouvant dans la zone d'action du système de prélèvement (28).

20. Système d'amenée selon l'une quelconque des revendications précédentes, **caractérisé en ce que** la direction de déplacement des systèmes de stabilisation (13) le long de leur trajectoire de déplacement (B) est orientée parallèlement au système d'avance du dispositif pour le remplissage des récipients.
